# EUROPEAN PATENT APPLICATION

(11) **EP 2 952 386 A1**
(43) Date of publication of application: **09.12.2015**
(21) Application number: 15160971.6
(22) Date of filing: 26.03.2015
(51) Int. Cl.: B60Q 1/12, B60Q 1/14, F21S 8/10

(54) **A VEHICLE LIGHT CONTROL DEVICE**

(30) Priority: 05.06.2014 TW 103119619; 05.06.2014 TW 103209939
(71) Applicant: Au-Lite Lighting Inc., Hsinchu County 307 (TW)
(72) Inventor: Chen, Chia-Ching, 307 Hsinchu County (TW)
(74) Representative: Browne, Robin Forsythe

(57) **Abstract**

A vehicle light control device (100) is disclosed, including a light source (101) to emit a light, a reflector (102) configured to reflect the light and having a light output surface (106), and an electronically-controlled optical filter (103) aligned with the light source (101) and the reflector (102), and configured to fully cover the light output surface (106). The position, transmittance and color of the pattern of the electronically-controlled optical filter are controlled by a computer system and its signals. The lighting effect for the high-beam, the low-beam, the fog light and the turn signals is accomplished in one single vehicle light device, and thus the design cost of the light device is reduced.

## Description

This application claims the benefit of Taiwan Patent Application Nos. 103119619 and 103209939, filed on June 5, 2014, at the Taiwan Intellectual Property Office, the disclosures of which are incorporated herein in their entirety by reference.

The present invention relates to a vehicle light control device, and more particularly to the vehicle light control device having an electronically-controlled optical filter.

There are many lamps configured on a vehicle nowadays. According to their application, the lamps can be categorized into a high-beam headlight, a low-beam headlight, a fog light, a turn signal, etc., and the various types of lamps are designed depending on their mechanical structures. Taking the high-beam headlight and the low-beam headlight as examples, the difference between these two headlights lies in the light-emitting angle or different position where the high-beam bulb and low-beam bulb are configured, thereby achieving the illuminating effects for long-distance and short-distance illumination. In the prior art, the light-emitting pattern is controlled using a reflector, an engraved lens and a light-blocking mask. In addition, the relative position between the mask and the light source, and the variations of the mask shape are controlled by a mechanical device such as a solenoid valve. Because the light-blocking mask is controlled by the solenoid valve to be disposed in different positions and to create different light patterns, the light from the light source passes through the light-blocking mask to project outward at various light-emitting angles and light-emitting patterns, such as a high-beam pattern and a low-beam pattern.

In addition, some luxury vehicles are equipped with adaptive headlights. While driving on a curved road, the driver turns the steering wheel, and the light-emitting direction of the headlights will follow the direction of the turning wheels so that the driver's field of vision is always aimed at the bright area. When designing an adaptive headlight, several motors and mechanical structures are configured to connect the steering wheel and the light holder, so that the turning effect of the adaptive headlight can be achieved by changing the projection angle of the headlight.

Powered mechanical devices such as solenoids or motors are essential for designing the high-beam, low-beam and adaptive headlights above, and these mechanisms increase the difficulty of design and assembly and material costs.

To overcome the drawbacks in the prior art, a vehicle light control device is disclosed. The particular design in the present invention not only deals with the problems described above, but is also easily implemented. Thus, the present invention has utility for the industry.

In accordance with one aspect of the present invention, a vehicle light control device is disclosed. The vehicle light control device includes a light source emitting a light, a reflector configured to reflect the light and having a light output surface, and an electronically-controlled optical filter aligned with the light source and the reflector, and configured to fully cover the light output surface.

In accordance with another aspect of the present invention, a lighting device for a vehicle is disclosed. The lighting device for a vehicle includes a light source emitting plural lights, an electronically-controlled device generating a signal, and an electronically-controlled optical filter electrically connected to the electronically-controlled device and disposed to pass all of the lights, wherein the electronically-controlled optical filter receives the signal to display a pattern by selectively blocking and transmitting the lights onto an object.

In accordance with the other aspect of the present invention, a light control device for a vehicle is disclosed. The light control device for a vehicle, wherein the vehicle includes a light holder and a light unit configured on the light holder to emit a light, and the light unit has a light bulb and a light-emitting profile in the light holder, the light control device includes a light filter configured between the light bulb and the light holder, and has an area being the same as that of the light-emitting profile, and thereby the light unit displays a first light-emitting state in a first condition and a second light-emitting state in a second condition.

The above objects and advantages of the present invention will become more readily apparent to those ordinarily skilled in the art after reviewing the following detailed descriptions and accompanying drawings.
Fig. 1 is an exploded view showing a light control device for the first embodiment in the present invention;
Figs. 2(a) to 2(d) are schematic diagrams showing the illuminating effects of the light control device of the first embodiment in the present invention;
Fig. 3 is a schematic diagram showing a light control device for the second embodiment in the present invention;
Fig. 4(a) is a schematic diagram showing a vehicle and its lighting device in the third embodiment of the present invention;
Fig. 4(b) is a schematic diagram showing the lighting device in the third embodiment of the present invention;
Fig. 4(c) is a schematic diagram showing the illuminating effect of the lighting device in the third embodiment of the present invention;
Fig. 4(d) is a schematic diagrams showing the illuminating pattern in the third embodiment of the present invention, where the light is projected on a wall;
Fig. 5(a) is a schematic diagram showing a light control device for a vehicle in the fourth embodiment of the present invention; and
Figs. 5(b) and 5(c) are schematic diagrams showing the illuminating effect of the light control device for the vehicle in the fourth embodiment of the present invention, wherein the left-hand side and the right-hand side plots of Figs. 5(b) and 5(c) respectively represent a front view and a perspective view.

The present invention will now be described more specifically with reference to the following embodiments. It is to be noted that the following descriptions of preferred embodiments of this invention are presented herein for the purposes of illustration and description only; they are not intended to be exhaustive or to be limited to the precise form disclosed.

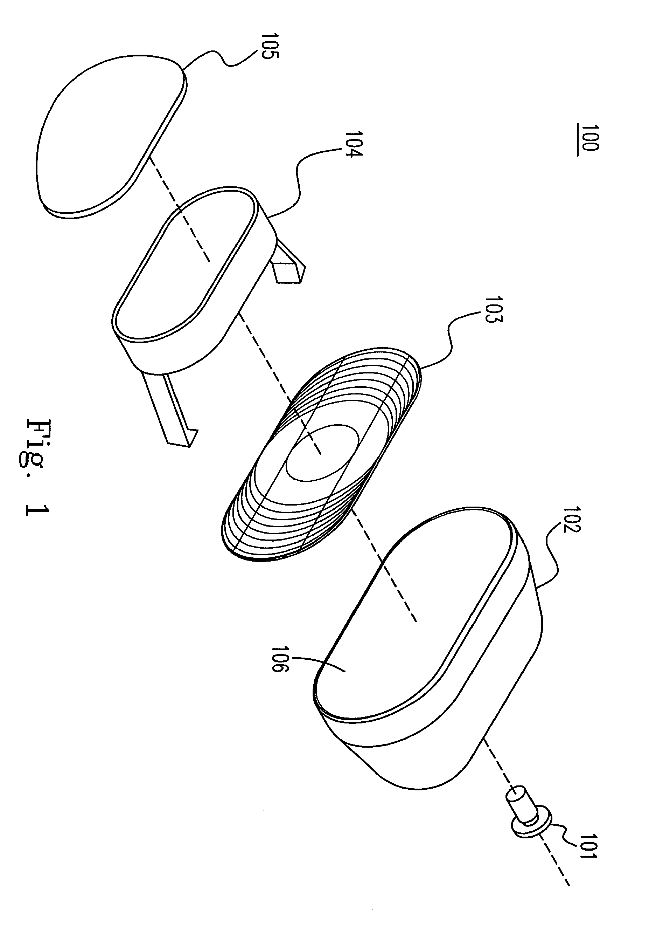

Please refer to Fig. 1, which is an exploded view showing a light control device for the first embodiment in the present invention. The light control device 100 includes a light source 101, a reflector 102 and an electronically-controlled optical filter 103, and preferably further includes a condenser lens 105 to focus light and a frame 104 to engage with the condenser lens 105. The light source 101 is configured at the focus of the reflector 102, and the light from the light source 101 reflects off of a light output surface 106 of the reflector 102. The light source 101 may be a halogen lamp, a light-emitting diode (LED), a high intensity discharge (HID) lamp or another type of light source. The electronically-controlled optical filter 103 is configured on the light output surface 106 of the reflector 102 and partially or fully covers the light output surface 106. The electronically-controlled optical filter 103 may be a liquid-crystal display (LCD), an electronic paper (e-paper) display, or a device capable of controlling the transmittance of light and/or the light-emitting state, and is electrically connected to a computer system (not shown in Fig. 1) inside the vehicle.

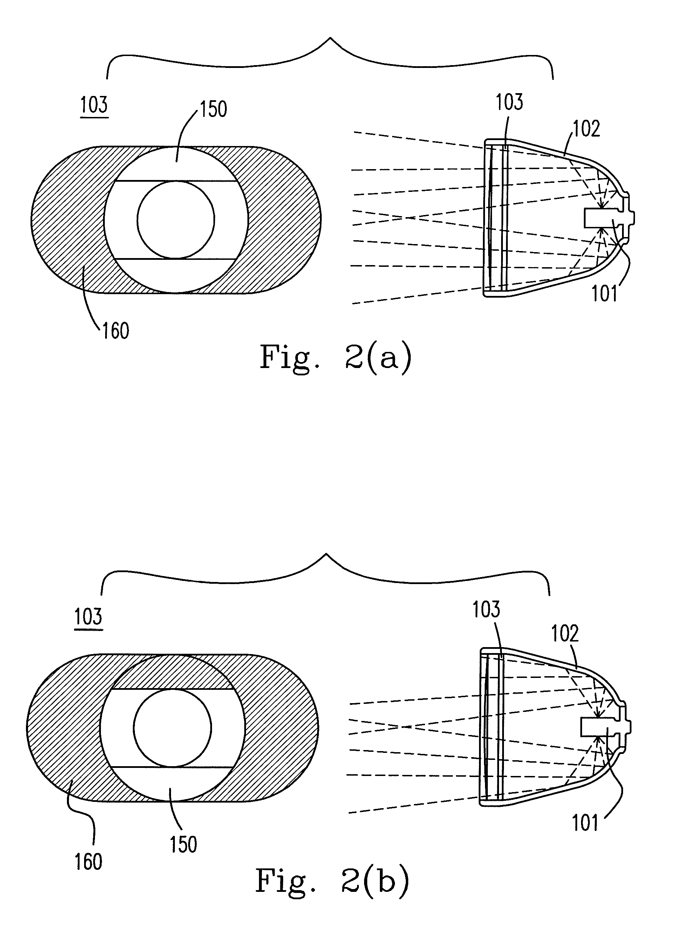

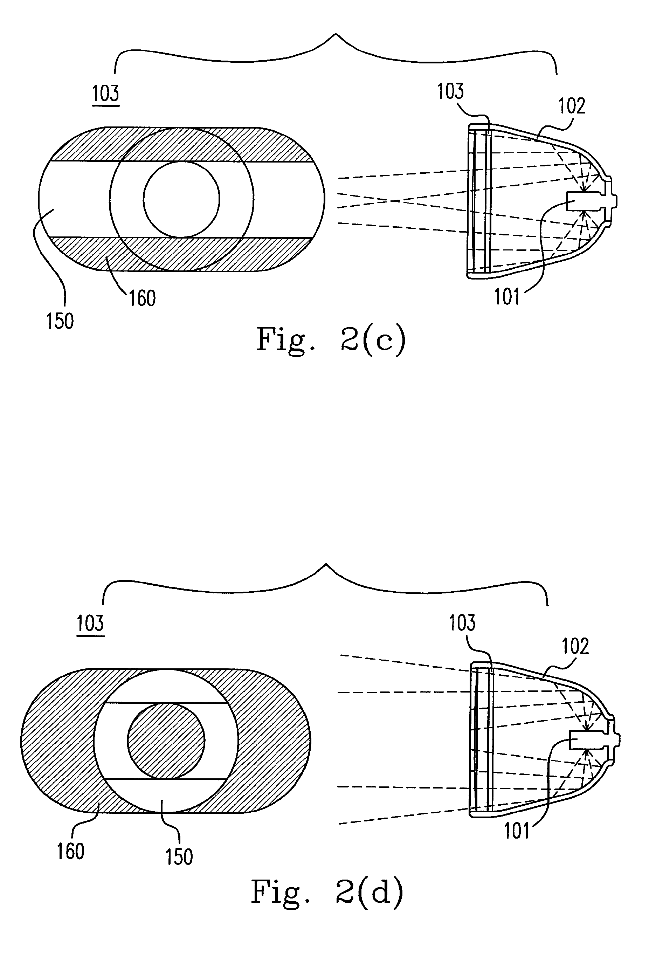

Please refer to Figs. 2(a) to 2(d), which are schematic diagrams showing the illuminating effects of the light control device for the first embodiment in the present invention. The left-hand side and the right-hand side plots of Figs. 2(a) to 2(d) respectively represent a front view (where only the electronically-controlled optical filter 103 is visible) and a side view of the assembled light control device which includes the light source 101, the reflector 102 and the electronically-controlled optical filter 103, wherein the frame 104 and the condenser lens 105 are omitted and not drawn in Figs. 2(a) to 2(d). The computer system (not shown) outputs an output signal to control the electronically-controlled optical filter 103 to display a light-transmitting area 150 (i.e. a transparent portion) and an opaque area 160 (i.e. a shaded portion). The pattern displayed on the light-transmitting area 150 and the opaque area 160 is adjusted by the computer system in response to the traffic conditions. The light emitting from the light source 101 passes through the light-transmitting area 150 and is blocked by the opaque area 160, so that the emitting angle and the illuminating range of the light can be controlled to present different illuminating effects such as a high-beam pattern (referring to Fig. 2 (a)), a low-beam pattern (referring to Fig. 2(b)), a fog light pattern (referring to Fig. 2(c)), a projector headlight pattern (referring to Fig. 2(d)) and so on. Furthermore, the brightness of the headlight varies due to the control of the transmittance of the light-transmitting area 150.

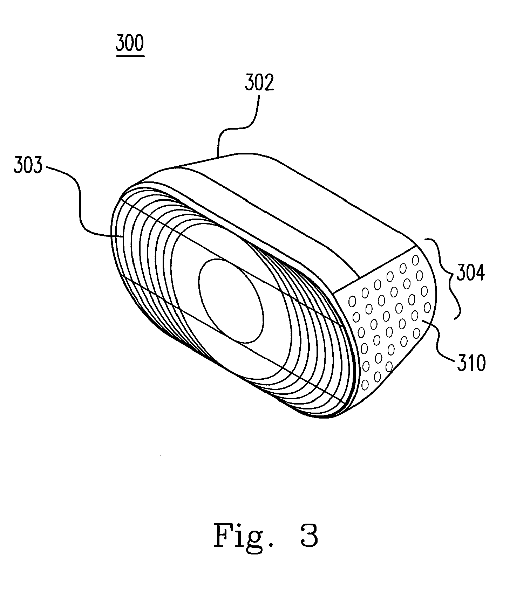

Please refer to Fig. 3, which is a schematic diagram showing the light control device for the second embodiment in the present invention. In addition to the electronically-controlled optical filter 303 configured at the light output surface of the reflector 302, there is a breach 304 situated at the reflector 302 on the light control device 300 to enable the other electronically-controlled optical filter 310 to be configured. Preferably, the electronically-controlled optical filter 310 is an LCD. The electronically-controlled optical filter 310 is in an opaque state when the vehicle is driving in a straight line. When the vehicle begins making a left turn or a right turn, the vehicle's light shows an illuminating pattern for the turn signal by changing the color and transmittance of the electronically-controlled optical filter 310.

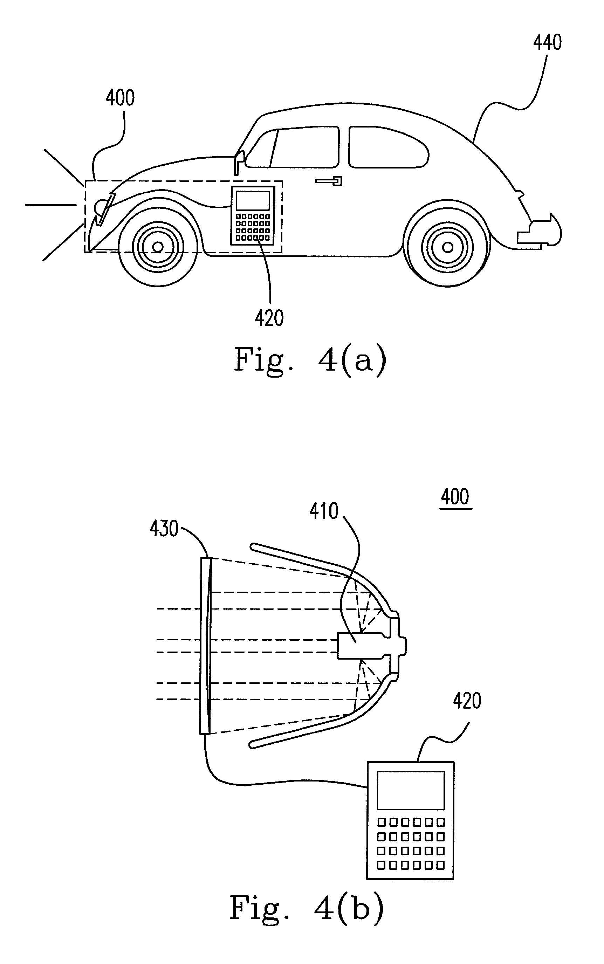

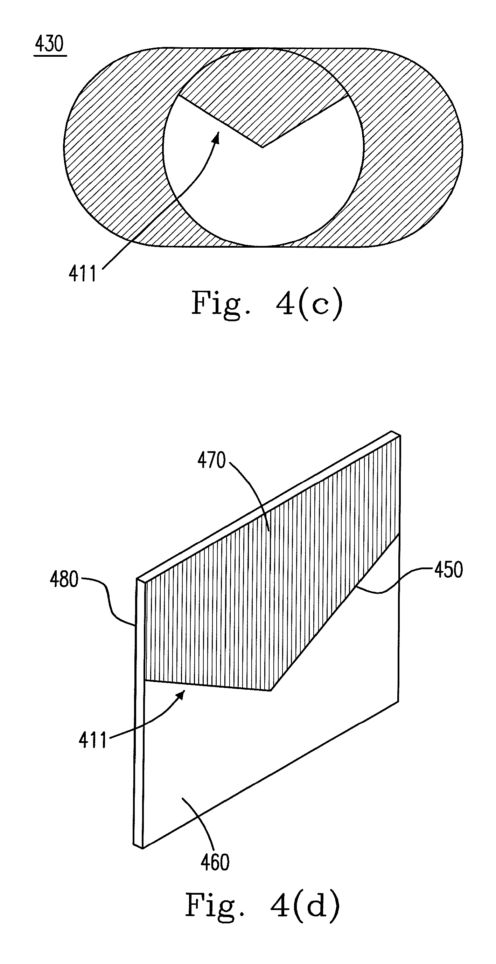

Please refer to Figs. 4(a) to 4(d), which show the various schematic diagrams for the third embodiment of the present invention. The lighting device 400 for a vehicle includes a light source 410 to emit light, an electronically-controlled device 420 and an electronically-controlled optical filter 430. The light source 410 may be a halogen lamp, an LED, an HID lamp or another light source. The electronically-controlled optical filter 430 is configured at all light paths and is electrically connected to the electronically-controlled device 420 of a vehicle 440. Preferably, the electronically-controlled device 420 is a computer system. The electronically-controlled optical filter 430 receives a signal from the electronically-controlled device 420 to show at least one pattern 411, and projects the at least one pattern 411 on a wall 480 by selectively blocking and transmitting the light. The pattern 411 presented on the wall 480 shows a cut-off line 450, which enables the pattern 411 to be separated into a first pattern 460 having a first brightness and a first area, and a second pattern 470 having a second brightness and a second area. In other words, a pattern for the first pattern 460 and the second pattern 470 presented on the wall 480 corresponds to the pattern 411. The skilled person in the art can design the eligible cut-off line 450 and its corresponding angle according to the Lighting and Light Signaling Devices for Automobiles of the Chinese National Standards (e.g. CNS 13538). In other words, the pattern of the electronically-controlled optical filter is designed according to national standards.

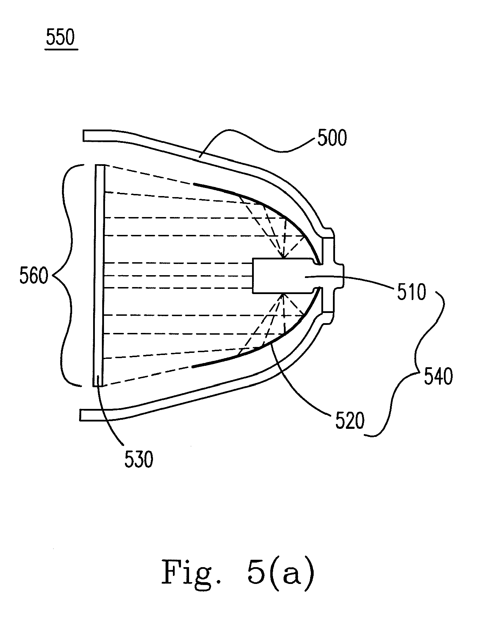

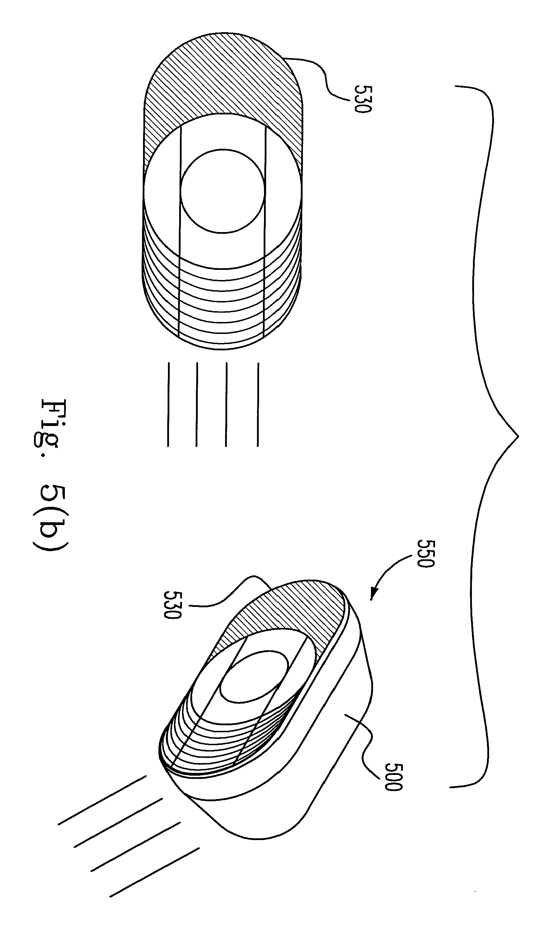

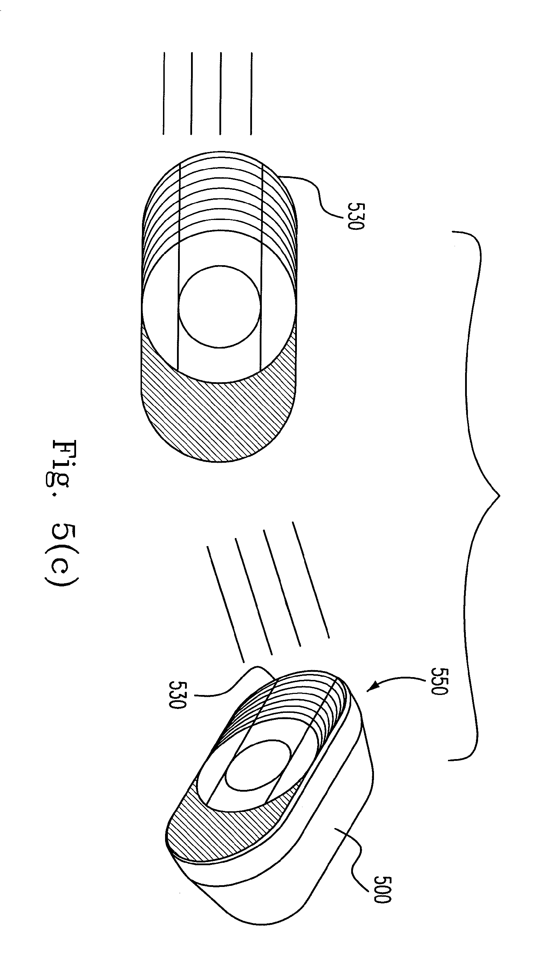

Please refer to Figs. 5(a) to 5(c), which show a fourth embodiment of the present invention. Fig. 5(a) shows a light control device 550 for a vehicle in the fourth embodiment of the present invention, wherein the vehicle (not shown in Fig. 5(a) through Fig. 5(c)) has a light holder 500, and a light unit 540 configured on the light holder 500 and capable of emitting light. The light unit 540 has a light bulb 510 and a reflector 520. The light bulb 510 may be a halogen lamp, an LED, an HID lamp or another light source. The reflector 520 reflects the light of the light bulb 510 to project a light-emitting profile 560. The light control device 550 further includes an optical filter 530 configured between the light bulb 510 and the light holder 500. The optical filter 503 may be an LCD and an e-paper display, or a device capable of controlling the transmittance of light and/or the light-emitting state, and is electrically connected to a computer system (not shown in Fig. 5(a) through Fig. 5(c)) inside the vehicle. The area of the optical filter 530 is substantially the same as that of the light-emitting profile 560, so that the light unit 540 shows a first light-emitting state in a first condition and a second light-emitting state in a second condition. Preferably, the first condition occurs when the vehicle is making a left turn, and the optical filter 530 receives the left-turn signal from the computer system to show a first pattern, so as to increase the projection angle of the vehicle light toward the left-hand side (referring to Fig. 5(b)). The second condition occurs when the vehicle is making a right turn, and the optical filter 530 receives the right-turn signal from the computer system to show a second pattern, so as to increase the projection angle of the vehicle light toward the right-hand side (referring to Fig. 5(c)). Thus, by controlling the optical filter 530, the projecting angle of the vehicle light can be shifted according to the left-turn or right-turn state of the vehicle, so that the lighting effect of the adaptive headlight is achieved, and the driver's safety is improved when he/she drives around a curved road at night.

Based on the above, the present invention discloses a light control device, wherein the light-blocking mask used in the prior art is replaced with the electronically-controlled optical filter. The position, the transmittance and the color of the pattern on the electronically-controlled optical filter is controlled by the computer system and its signals. The design of the mechanical device where the light-blocking mask is shifted is not needed in the present invention. The various uses including the high-beam headlights, the low-beam headlights, the fog lights and the turn signals can be accomplished in one single vehicle light device, and the advantage of the adaptive headlight can be attained without mechanical structures such as motors. With the cooperation of the computer control, the light-emitting state can be shifted immediately according to the real-time traffic. The present invention has the benefits of simplifying the design and development of the light-emitting pattern and the structure of the light device.

### Embodiments

1. A vehicle light control device, comprising a light source emitting a light, a reflector configured to reflect the light and having a light output surface, and an electronically-controlled optical filter aligned with the light source and the reflector, and configured to fully cover the light output surface.
2. The vehicle light control device of Embodiment 1, further comprising a condenser lens selectively configured in a first position between the light source and the electronically-controlled optical filter to focus the reflected light, and a second position far from the reflector and in front of the electronically-controlled optical filter to focus the reflected light passing through the electronically-controlled optical filter, and a frame to position the condenser lens.
3. The vehicle light control device of any one of Embodiments 1-2, wherein the light source is one selected from the group consisting of a halogen lamp, a light-emitting diode (LED), and a high intensity discharge (HID) lamp.
4. The vehicle light control device of any one of Embodiments 1-3, wherein the reflector has a breach and the electronically-controlled optical filter is configured in the breach.
5. The vehicle light control device of any one of Embodiments 1-4, wherein the electronically-controlled optical filter is one of a liquid-crystal display (LCD) and an electronic paper (e-paper) display
6. The vehicle light control device of any one of Embodiments 1-5, wherein the vehicle light control device is electrically connected to a computer system inside a vehicle to receive a signal from the computer system.
7. The vehicle light control device of any one of Embodiments 1-6, wherein the signal enables the electronically-controlled optical filter to display a light-transmitting area and an opaque area.
8. The vehicle light control device of any one of Embodiments 1-7, wherein the signal controls the transmittance of the light-transmitting area.
9. The vehicle light control device of any one of Embodiments 1-8, wherein the vehicle light control device displays a light-emitting state selected from the group consisting of a high beam, a low beam, a fog light, a daytime running light, a turn signal, a brake light, a parking light, and an adaptive headlight.
10. A lighting device for a vehicle, comprising a light source emitting plural lights, an electronically-controlled device generating a signal, and an electronically-controlled optical filter electrically connected to the electronically-controlled device and disposed to pass all of the lights, wherein the electronically-controlled optical filter receives the signal to display a pattern by selectively blocking and transmitting the lights onto an object.
11. The lighting device for a vehicle of Embodiment 10, wherein the object is a wall and the pattern shows a cut-off line on the wall.
12. The lighting device for a vehicle of Embodiments 10-11, wherein the pattern on the wall comprises a first pattern having a first brightness area and a second pattern having a second brightness area, wherein the first brightness area has an area being different than that of the second brightness area.
13. The lighting device for a vehicle of Embodiments 10-12, wherein the pattern on the wall comprises a first pattern with a first brightness and a second pattern with a second brightness, wherein the first brightness is different than the second brightness.
14. A light control device for a vehicle, wherein the vehicle includes a light holder and a light unit configured on the light holder to emit a light, and the light unit has a light bulb and a light-emitting profile in the light holder, the light control device comprises a light filter configured between the light bulb and the light holder, and has an area being the same as that of the light-emitting profile, and thereby the light unit displays a first light-emitting state in a first condition and a second light-emitting state in a second condition.
15. The light control device for a vehicle of Embodiment 14, wherein the light holder has a reflector to reflect the light of the light bulb to form the light-emitting profile.
16. The light control device for a vehicle of any one of Embodiments 14-15, wherein the light bulb is one selected from the group consisting of a halogen lamp, a light-emitting diode (LED), and a high intensity discharge (HID) lamp.
17. The light control device for a vehicle of any one of Embodiments 14-16, wherein the light filter is electrically connected to a computer system to receive a signal from the computer system.
18. The light control device for a vehicle of any one of Embodiments 14-17, wherein the light filter receives the signal to display a first pattern in the first condition and a second pattern in the second condition.
19. The light control device for a vehicle of any one of Embodiments 14-18, wherein either of the first light-emitting state or the second light-emitting state is accomplished by one selected from the group consisting of a high beam, a low beam, a fog light, a daytime running light, a turn signal, a brake light, a parking light, and an adaptive headlight.
20. The light control device for a vehicle of any one of Embodiments 14-19, wherein the optical filter is one selected from the group consisting of a liquid-crystal display (LCD), an electronic paper (e-paper) display, and a combination thereof.

While the invention has been described in terms of what is presently considered to be the most practical and preferred embodiments, it is to be understood that the invention needs not be limited to the disclosed embodiments. On the contrary, it is intended to cover various modifications and similar arrangements included within the spirit and scope of the appended claims which are to be accorded with the broadest interpretation so as to encompass all such modifications and similar structures.

## Claims

1. A vehicle light control device (100), **characterized by** comprising:
a light source (101) emitting a light;
a reflector (102) configured to reflect the light and having a light output surface (106); and
an electronically-controlled optical filter (103) aligned with the light source (101) and the reflector (102), and configured to fully cover the light output surface (106).

2. The device as claimed in Claim 1, **characterized by** further comprising:
a condenser lens (105) selectively configured in a first position between the light source (101) and the electronically-controlled optical filter (103) to focus the reflected light, and a second position far from the reflector (102) and in front of the electronically-controlled optical filter (103) to focus the reflected light passing through the electronic-controlled optical filter (103);
and
a frame (104) positioning the condenser lens (105).

3. The device as claimed in Claim 1 or 2, **characterized in that** the light source (101) is one selected from the group consisting of a halogen lamp, a light-emitting diode (LED), and a high intensity discharge (HID) lamp.

4. The device as claimed in any one of Claims 1-3, **characterized in that** the reflector (302) has a breach (304) and the electronic-controlled optical filter (310) is configured in the breach (304).

5. The device as claimed in any one of Claims 1-4, **characterized in that** the electronically-controlled optical filter (103) is one of a liquid-crystal display (LCD) and an electronic paper (e-paper) display.

6. The device as claimed in any one of Claims 1-5, **characterized in that** the vehicle light control device (100) is electrically connected to a computer system in a vehicle (440) to receive a signal from the computer system.

7. The device as claimed in any one of Claims 1-6, **characterized in that** the signal enables the electronically-controlled optical filter (103) to display a light-transmitting area (150) and an opaque area (160), and controls the transmittance of the light-transmitting area (150).

8. The device as claimed in any one of Claims 1-7, **characterized in that** the vehicle light control device (100) displays a light-emitting state selected from the group consisting of a high beam, a low beam, a fog light, a daytime running light, a turn signal, a brake light, a parking light, and an adaptive headlight.

9. A method for controlling a light device (550) for a vehicle (440), wherein the vehicle (440) includes a light holder (500) and a light unit (540) configured on the light holder (500) to emit a light, and the light unit (540) has a light bulb (510) and a light-emitting profile (560) in the light holder (500), the method **characterized by** comprising:
configuring a light filter (530) between the light bulb (510) and the light holder (500), wherein the light filter (530) has an area being the same as that of the light-emitting profile (560), and thereby the light unit (540) displays a first light-emitting state in a first condition and a second light-emitting state in a second condition.

10. The method as claimed in Claim 9, **characterized in that** the light holder (500) has a reflector (520) to reflect the light of the light bulb (510) to form the light-emitting profile (560).

11. The method as claimed in Claim 9 or 10, **characterized in that** the light bulb (510) is one selected from the group consisting of a halogen lamp, a light-emitting diode (LED), and a high intensity discharge (HID) lamp.

12. The method as claimed in any one of Claims 9-11, **characterized in that** the light filter (530) is electrically connected to a computer system to receive a signal from the computer system.

13. The method as claimed in any one of Claims 9-12, **characterized in that** the light filter (530) receives the signal to display a first pattern in the first condition and a second pattern in the second condition.

14. The method as claimed in any one of Claims 9-13, **characterized in that** either of the first light-emitting state or the second light-emitting state is accomplished by one selected from the group consisting of a high beam, a low beam, a fog light, a daytime running light, a turn signal, a brake light, a parking light, and an adaptive headlight.

15. The method as claimed in any one of Claims 9-14, **characterized in that** the optical filter (530) is one selected from the group consisting of a liquid-crystal display (LCD), an electronic paper (e-paper) display, and a combination thereof.
